# EUROPEAN PATENT APPLICATION

(11) **EP 2 503 623 A1**
(43) Date of publication of application: **26.09.2012**
(21) Application number: 12158543.4
(22) Date of filing: 08.03.2012
(51) Int. Cl.: H01M 2/04, H01M 10/04

(54) **Heavy-vehicle lead-acid battery closure system**

(30) Priority: 23.03.2011 ES 201130421
(71) Applicant: Exide Technologies S.A.U., 19200 Azuqueca (Guadalajara) (ES)
(72) Inventor: Collado Parra, Ernesto, 19200 Azuqueca (Guadalajara) (ES); Gutiérrez Heredia, Jesús, 19200 Azuqueca (Guadalajara) (ES)
(74) Representative: Elzaburu Marquez, Alberto

(57) **Abstract**

Sealing system for lead-acid batteries for heavy vehicles, having a cap which includes, on one hand, a system of labyrinths intended to avoid electrolyte leaks, providing a centralised outlet; and on the other, multiple plugs for the battery elements, which provides a single point of access to more than one cell at the same time to allow them to be filled simultaneously. These characteristics are combined in a cap that is even with the level of the cover and that is also substantially thermally insulated from the rest of the battery, which condenses emitted vapours, while at the same time reducing vapour emission, and facilitating the return of the condensed liquids to the interior of the element due to the special geometry of the piece, all of which results in a battery for heavy vehicles such as trucks, that can be considered to be maintenance-free.

## Description

### 1.- Introduction

This invention refers to the sealing system of lead-acid batteries, particularly lead-acid batteries for heavy vehicles such as trucks. The objective of this invention is to provide the battery with a sealing element and a series of components that are sufficient for the battery to be considered maintenance-free.

The invention consists of a cover-cap with a centralised outlet for gases and a flat surface. The cover is sealed, while the cap is attached to the cover in order to allow it to be removed if the electrolyte needs to be refilled.

### 2.- Background art

Normal truck batteries currently use a series of battery covers with six openings that pass through them vertically to access the vessels in the recipient. These covers are also equipped with several tabs in the top that are used for a specific type of anchoring of the battery in certain trucks. The six openings are covered by six plugs that are independent from one another. Each plug has a labyrinth and threaded closure. This configuration presents a series of inconveniences such as:
- lack of a sufficiently tight seal for the plugs, which leads to loss of the electrolyte;
- difficult in refilling the lost electrolyte because it must be refilled element by element; and
- difficulties in storing and stacking these batteries due to the different pieces that protrude from the cover.

### 3.- Detailed description of the invention

The growing interest expressed by truck-battery customers for a type of maintenance-free technology is clear. This is due to the specific characteristics of truck batteries, which are subjected to thousands of kilometres and hundreds of hours of operation every year. For this reason, a solution is needed that allows the battery cells to be refilled with water, but that at the same time provides a seal that is as watertight as possible, even in the harshest working conditions.

The object of this invention is to implement a battery closure that resolves the aforementioned problems. The solution to these problems is based, on the one hand, on a cap that incorporates a labyrinth system that prevents electrolyte leaks and provides it with a centralised outlet; and on the other hand, on the fact that each cover incorporates a plurality of caps for the battery elements, which provides a single point of access to more than one cell at the same time in order to refill them simultaneously. These characteristics are combined in a cap that is also substantially thermally insulated from the rest of the battery, by means of which condensation of the vapours emitted is achieved, while at the same time reducing vapour emission, and facilitating the return of the condensed liquids to the interior of the element due to the special geometry of the piece.

Consequently, a first aspect of the invention is directed towards a lead-acid truck battery which comprises a cover that has at least one depression intended to hold at least one cap having a plurality of plugs intended to seal the respective battery elements, and at least one cap intended to fit in the respective depression on the cover, in which the cap is substantially insulated thermally from the cover, and furthermore incorporates a labyrinth system aimed at condensing the electrolyte that evaporates from the elements and returning it to the element after it condenses, characterised in that the height of the cap is substantially the same as the depth of the respective depression in the cover that will hold it, so that once the cap has been inserted into the corresponding depression on the cover, the cap is level with the upper surface of the cover, and the cover and cap combination is essentially flat and free of protrusions.

This means that while the technology of the maintenance-free electrodes of these batteries already helps reduce the loss of electrolyte, the aforementioned sealing system further reduces loss, thereby extending the period over which the battery can operate without maintenance; and in any case, when maintenance is necessary, since the sealing system is accessible, the operations can be carried out without removing the caps.

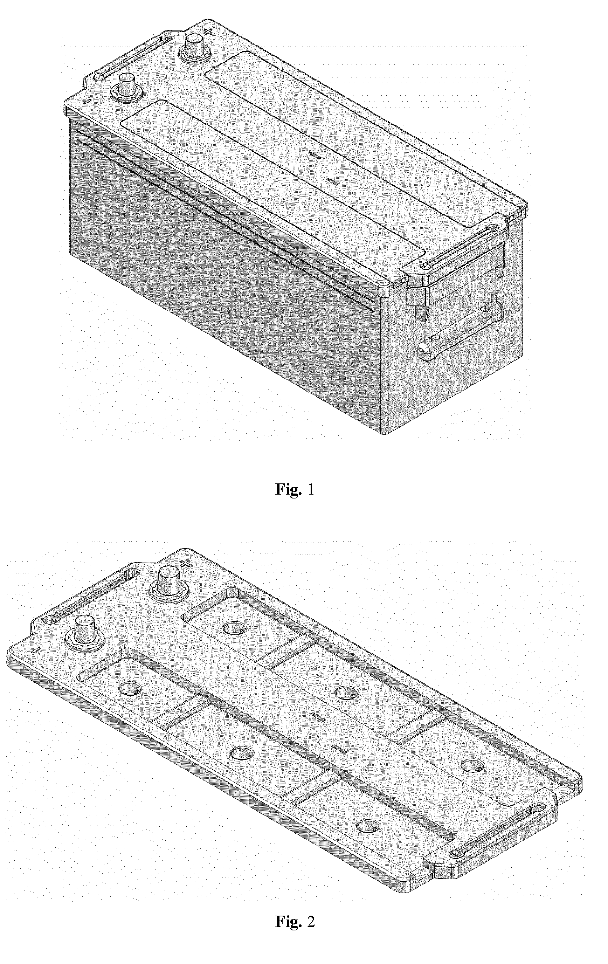

Also, the cover-cap assembly that is the object of the invention has an innovative, more efficient design, eliminating the anchor tabs on the cover surface. The new cover design has depressions that are lower than the upper surfaces of the cover that are intended to house the caps (see figures no. 1 and no. 2). With the caps specifically intended to seal those openings, and since this is a depression, the cap is level with the upper surface of the cover, leaving it completely flat. This flat cover facilitates placement because, as there are no tabs or individual plugs, at it is easier to hold, which improves stacking for storage, distribution, and production.

The upper caps are the ones that receive the electrolyte vapours from each one of the vessels that must be treated. A patented proprietary vapour condensation system has been used for this (see patent publication ES 2326098 T3 or EP 1 962 355). However, on the one hand, this invention improves electrolyte condensation by reducing the condensation loss due to evaporation, and on the other, the gasification process directs gases to the opposite side of the battery terminals, so that potentially explosive gases that are emitted are discharged by the elements that are further from the battery terminals, which is the point where it is most likely for sparks to be generated at any given time. The acid evaporated due to temperatures generated under normal operating conditions is retained by the condensation system, which then returns it to the battery cells, minimising electrolyte losses.

Likewise, since these are not individual plugs, but rather a single piece assembly, the system has a more effective labyrinth to prevent battery acid from leaking, and consequently reduces loss of electrolyte. The reason for this is that in the cap's labyrinth system, the labyrinths of the different plugs are interconnected in such a way that the labyrinth system of the cap is not compartmentalised for the different plugs. This means that the labyrinth is more effective, thus reducing electrolyte loss.

Preferably, these caps will be pressed to the cover, without the need to screw in the plugs, which improves the sealing system. This also enables the battery users to fill the vessels easily, without having to unscrew all of the plugs, and making it possible to correctly close all of the openings without leaving one of the plugs closed more tightly or loosely than the others.

The material used in the cover includes an elastomer percentage of between 10% and 40%. The combination of the elastomer, together with polypropylene affords greater flexibility. This improves the fit and provides a tighter seal.

### 4.- Brief description of the figures

The attached figures include a series of illustrative plans and drawings of the invention to clarify the concepts covered in this descriptive summary.
Figure 1 shows the battery installed with the cover and caps that are the object of the invention.

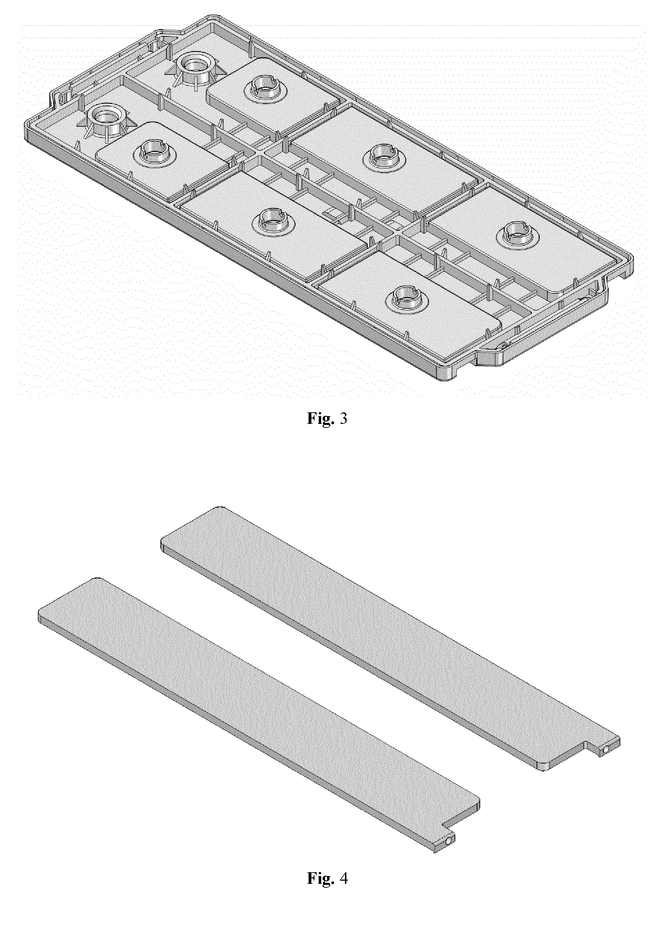

Figures 2 and 3 show a detailed view of the cover, viewed from above and below, respectively.

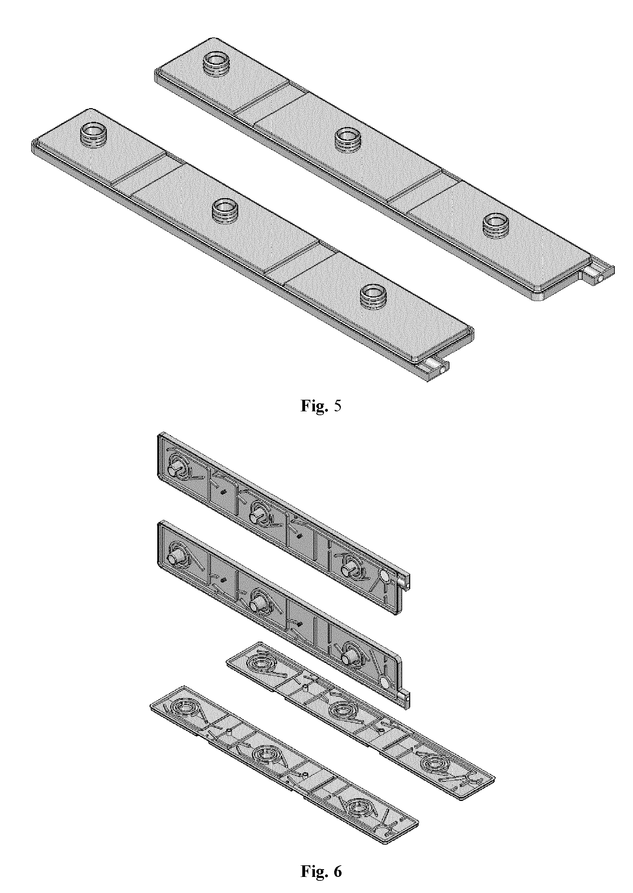

Figures 4 and 5 describe the upper and lower views of the caps.
Figure 6 shows a detailed view of the geometry of the labyrinth included in the caps, intended to prevent acid from leaking out and also redirects it towards the inside of the vessels.

### 5.- Experimental examples

To verify the performance of this cover-cap system, generic lead-acid truck batteries were used, under the conditions specified in EN 50342, B25 5210, and TL 825 06.

### 5.1 180° and side-tip test:

This test verifies the possibilities of leakage in two batteries, tipping them 90° onto each side, and also turning them over 180°. The test conditions were as follows. The batteries used were fully charged at least 24 hours prior to the test. The batteries were placed consecutively on each one of their four sides, and upside down, for 30 minutes each time, and were then placed in their original position again for 5 minutes. After waiting 30 minutes, the batteries were checked for signs of leakage.

Two batteries conforming to the description of the invention (batteries n° 4 and 5), as well as a standard truck battery, that did not conform to the invention (control battery) were subjected to this test. The results are shown in Table 1 below.

**Table 1**

| | Test | Battery n° 4 | Battery n° 5 | Control battery |
|---|---|---|---|---|
| Side 1 | Acid leak (yes/no) | No | No | No |
| Side 2 | Acid leak (yes/no) | No | No | No |
| Side 3 | Acid leak (yes/no) | No | No | No |
| Side 4 | Acid leak (yes/no) | No | No | **Yes** |
| Upside Down | Acid leak (yes/no) | No | No | **Yes** |

### 5.2 Gas return test

The following test was a gas return test to verify the cover-cap labyrinth. The test conditions were as follows. Five minutes after the tip test at 35°, the batteries were charged at 20A for 10 minutes.

Two batteries conforming to the description of the invention (batteries n° 1 and 2), as well as a standard truck battery, that did not conform to the invention (control battery) were subjected to this test. The results are shown in Table 2 below.

**Table 2**

| BATTERY No. | Battery n° 1 | Battery n° 2 | Control battery |
|---|---|---|---|
| Acid leak (yes/no) | no | no | **Yes,** leak at the third plug |

### 5.3 Pressure Test

The test conditions were as follows. The batteries were fully charged with 10A and the intensity of the current was increased every minute in increments of 10A until 100A was reached. They were then charged for 10 minutes at 100A. A gas sensor that changes colour in contact with gas was installed at the gas outlet. One battery conforming to the description of the invention (battery n° 3), as well as a standard truck battery that did not conform to the invention (control battery), were subjected to this test. The results are shown in Table 3 below.

**Table 3**

| | Battery n° 3 | Control battery |
|---|---|---|
| Acid leak (yes/no) | no | **Yes.** Leak at the fifth and sixth plug. |

### 5.4 Vibration Test

The test conditions were as follows. Previously charged batteries were used and subjected to an initial discharge at 600A to 6.0V. They were then charged at 16V for 24h at a current of 45Ah, and then placed in a 25°C water bath for 24 hours. The battery was then vibrated at 6G using a sine wave with a frequency of 30 Hz for 2 hours. No leaks occurred during this vibration test. The batteries were then left in the 25°C water bath for 4 hours and then subjected to another discharge at 600A to 6.0 V. One battery conforming to the description of the invention (battery n° 1), as well as a standard truck battery, that did not conform to the invention (control battery) were subjected to this test. The results are shown in Table 4 below:

**Table 4**

| | | | |
|---|---|---|---|
| | Initial discharge at 600A | | Leak during the vibration test? |
| | Time to 7.2 V (s) | Time to 6.0 V (s) (s) | |
| Battery n° 1 | 316 | 327 | No |
| Control Battery | 216 | 240 | Leaking as soon as vibration began |

The control battery failed in the final discharge at 600A because the discharge time to 7.2V was zero seconds. This control battery had six freely-removable individual threaded plugs, which is why the leak occurred as soon as the vibration began.

### 6.- Conclusions

The batteries that were used to verify the characteristics of the cover produced satisfactory results in the mechanical tests, and no leaks occurred during any of the described tests.

The cover-cap system of the invention therefore fulfils all of the necessary conditions as specified in the regulations to make them viable for use in maintenance-free lead-acid truck batteries and also provide the additional advantage of an easier levelling by the user and improved gasification.

## Claims

1. Lead-acid heavy vehicle battery comprising:
- a cover provided with at least one depression intended to house at least one cap including a plurality of plugs intended to seal the respective battery elements, and
- at least one cap intended to fit into the respective depression in the cover, with the cap being substantially thermally insulated from the cover, and furthermore incorporates a labyrinth system aimed at condensing the electrolyte that evaporates from the elements and returning it to the element after it condenses,
**characterised in that** the height of the cap is substantially the same as the depth of the depression in the cover intended to house it, so that once the cap has been inserted into the corresponding depression on the cover, the cap is level with the upper surface of the cover, and the cover and cap combination is essentially flat and free of protrusions.

2. The battery according to claim 1, wherein the cap is configured to be coupled into the respective depression in the cover by pressure.

3. The battery according to claims 1 or 2 wherein, in the labyrinth system of the cap, the labyrinths of the different plugs are interconnected in such a way that the labyrinth system of the cap is not compartmentalised for the different plugs.

4. The battery according to any one of claims 1 to 3 wherein the labyrinth system is configured in such a way that the gases given off by the elements are channelled to a common conduit and evacuated from the battery through the side of the battery opposite the terminals.

5. The battery according to any one of claims 1 to 3, wherein the composition of the cap includes an elastomer percentage of between 10% and 40% by weight.
